# EUROPEAN PATENT APPLICATION

(11) **EP 4 794 438 A1**
(43) Date of publication of application: **19.08.2026**
(21) Application number: 24877052.1
(22) Date of filing: 30.09.2024
(51) Int. Cl.: H04W 74/04, H04W 72/0446, H04W 84/12

(54) **ACCESS POINT DEVICE, CONTROL METHOD, AND PROGRAM**

(30) Priority: 13.10.2023 JP 2023177889
(71) Applicant: Canon Kabushiki Kaisha, Tokyo 146-8501 (JP)
(72) Inventor: YOSHIKAWA Yuki, Tokyo 146-8501 (JP); INOHIZA Hirohiko, Tokyo 146-8501 (JP)
(74) Representative: Canon Europe Limited
(86) International application number: PCT/JP2024/034972
(87) International publication number: WO 2025/079454

(57) **Abstract**

An access point apparatus for performing wireless communication conforming to IEEE802.11 standard on a time-division basis in cooperation with one or more other access point apparatuses includes a reception unit configured to receive a notification frame for allocating a Transmission Opportunity (TXOP) from other access points, and a transmission unit configured to, in a case where the TXOP is allocated to its own access point apparatus, transmit a Trigger frame having a setting of a period of communication between the access point apparatus and a station apparatus connected to the access point based on a period of the TXOP.

## Description

### Technical Field

The present disclosure relates to an access point apparatus for performing wireless communication.

### Background Art

The Institute of Electrical and Electronic Engineers (IEEE)802.11 standard is known as a communication standard for Wireless Local Area Networks (Wireless LANs). With the IEEE802.11be and successor standards, there has been considered a Multi-AP communication technique for improving the communication efficiency and throughput through cooperative operations of a plurality of access point apparatuses (hereinafter simply referred to as APs).

Patent Document 1 describes a technique in which a Transmission Opportunity (TXOP) secured by one AP is partly allocated to other APs in a shared manner, and a plurality of APs performs cooperative communication on a time-division basis. APs are classified into Sharing APs that allocate a TXOP to other APs, and Shared APs that perform communication based on the allocated TXOP. A Sharing AP transmits a frame for notifying of the TXOP allocation to a Shared AP to partly share the TXOP.

### Citation List

### Patent Literature

PTL 1: Japanese Patent Laid-Open No. 2023-84929

### Summary of Invention

### Technical Problem

A station (hereinafter also referred to as a STA) connected to the Shared AP is not necessarily able to communicate with the Sharing AP. For example, the STA may be unable to communicate with the sharing AP if the communication distance between the STA and the Sharing AP is long or if an object that blocks communication exists between the STA and the Sharing AP. In this case, the STA is unable to receive a frame for notifying of the TXOP allocation transmitted by the Sharing AP. Therefore, the STA is unable to recognize the TXOP and hence may possibly transmit the frame at an unsuitable timing during the period of the TXOP.

The present disclosure has been embodied in view of at least one of the above-described issues. According to an aspect of the present disclosure, the present disclosure is directed to suitably controlling frame transmission of an STA during the period of a TXOP of an AP having been subjected to the TXOP allocation by other APs.

### Solution to Problem

According to an aspect of the present disclosure, an access point apparatus for performing wireless communication conforming to IEEE802.11 standard on a time-division basis in cooperation with one or more other access point apparatuses includes a reception unit configured to receive a notification frame for allocating a Transmission Opportunity (TXOP) from other access points, and a transmission unit configured to, in a case where the TXOP is allocated to its own access point apparatus, transmit a Trigger frame having a setting of a period of communication between the access point apparatus and a station apparatus connected to the access point based on a period of the TXOP. Advantageous Effects of Invention

According to an aspect of the present disclosure, frame transmission of an STA can be suitably controlled during the period of a TXOP of an AP having been subjected to the TXOP allocation by other APs.

### Brief Description of Drawings

[Fig. 1] Fig. 1 illustrates a first example of a configuration of a network system.
[Fig. 2] Fig. 2 illustrates an example of a hardware configuration of an Access Point (AP).
[Fig. 3] Fig. 3 illustrates an example of a software configuration of the AP.
[Fig. 4] Fig. 4 illustrates a first example of a sequence between APs and stations (STAs).
[Fig. 5] Fig. 5 illustrates a first example of a notification frame for TXOP allocation.
[Fig. 6] Fig. 6 is a flowchart illustrating an example of communication control by a Sharing AP.
[Fig. 7] Fig. 7 is a flowchart illustrating a first example of communication control by a Shared AP.
[Fig. 8] Fig. 8 illustrates a second example of a configuration of a network system.
[Fig. 9] Fig. 9 illustrates a second example of a sequence between APs and STAs.
[Fig. 10] Fig. 10 illustrates a second example of a notification frame for TXOP allocation.
[Fig. 11] Fig. 11 is a flowchart illustrating a second example of communication control by the Shared AP.

### Description of Embodiments

Embodiments of the present disclosure will be described below with reference to the accompanying drawings. The following embodiments do not limit the present disclosure within the scope of the appended claims. Although a plurality of features is described in the embodiments, not all of the plurality of features is indispensable to the present disclosure, and the plurality of features may be arbitrarily combined. In the accompanying drawings, identical or similar components are assigned the same reference numerals, and duplicated descriptions thereof will be omitted.

### <First Embodiment>

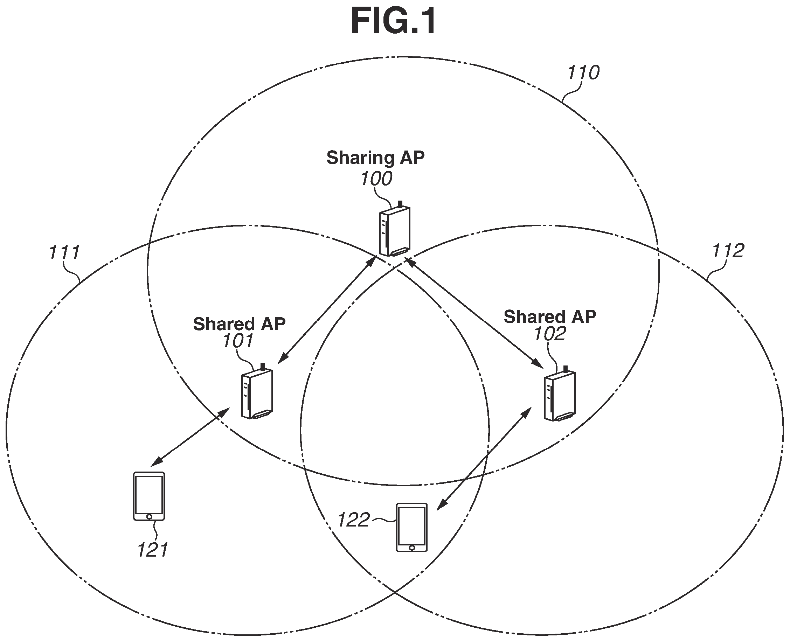

Fig. 1 illustrates an example of a configuration of a network system according to a first embodiment. This network system includes three access point apparatuses (hereinafter also simply referred to as APs, AP STAs, or access points) and two station apparatuses (hereinafter also simply referred to STAs, Non-AP STAs, or stations). Hereinafter, APs 100 to 102 and STAs 121 and 122 are collectively referred to as communication apparatuses.

The APs 100 to 102 are configured to implement frame communication conforming to the IEEE802.11bn standard as a successor of the IEEE802.11be standard targeting a maximum transmission rate of 46.08 Gbps. Likewise, the STAs 121 and 122 are also configured to implement frame communication conforming to the successor standard.

IEEE is an abbreviation for Institute of Electrical and Electronics Engineers. The IEEE802.11bn standard as a successor standard of the IEEE802.11be standard is mainly characterized in high-reliability communication, low-latency communication, and improved throughput during congestion. A frame communicated according to the successor standard is also referred to as Ultra High Reliability (UHR) PPDU. PPDU is an abbreviation for PLCP Protocol Data Unit. PLCP is an abbreviation for Physical Layer Convergence Protocol.

The name of the IEEE802.11bn UHR standard is provided for convenience based on the target to be achieved by the successor and features that are to be key characteristics of the standard, and may be changed to a different name in a state where the formulation of the standard is completed. Meanwhile, note that the present specification and the appended claims are essentially applicable to all successor standards of the IEEE 802.11be standard.

Although Fig. 1 illustrates an example of a wireless communication network including three APs and two STAs, the numbers of APs and STAs may be larger or smaller than those illustrated in Fig. 1. Although the APs 100 to 102 and the STAs 121 and 122 support UHR PPDU communication (transmission and reception) conforming to the IEEE802.11bn standard, the present embodiment is not limited thereto. In addition, the APs and the STAs can be configured to support PPDU communication conforming to a legacy standard earlier than the IEEE802.11bn standard. More specifically, the APs 100 to 102 and the STAs 121 and 122 can be configured to support PPDU transmission and reception conforming to the IEEE802.11a/b/g/n/ac/ax/be standards.

The AP 100 forms a network 110 for the STAs. Likewise, the APs 101 and 102 form networks 111 and 112, respectively. The STA 121 is an STA that participates in the network formed by the AP 101, and the STA 122 is an STA that participates in the network formed by the AP 102. A network formed by each AP is referred to as a Basic Service Set (BSS).

According to the present embodiment, a frame transmitted by the AP 100 can be received by the APs 101 and 102, a frame transmitted by the AP 101 can be received by the STAs 121 and 122, and a frame transmitted by the AP 102 can be received by the STA 122. The APs 101 and 102 may or may not be able to transmit and receive each other's frame. The STA 121 cannot receive a frame from the AP 100 but can receive a frame from the AP 101. The STA 122 cannot receive a frame from the AP 100 but can receive a frame from the APs 101 and 102.

The APs 100 to 102 and the STAs 121 and 122 can be configured to support wireless communication conforming to Bluetooth^{®}, NFC, Bluetooth^{®} Low Energy (LE), and other standards. NFC is an abbreviation for Near Field Communication.

The APs 100 to 102 can be configured to support wired communication using an Ethernet^{®} cable and wired communication using an optical fiber. The present embodiment assumes a case where the APs 100 to 102 are connected to the Internet via an Ethernet^{®} cable. Specific examples of the APs 100 to 102 and the STAs 121 and 122 include wireless LAN routers and personal computers (PCs) but are not limited thereto. The APs 100 to 102 and the STAs 121 and 122 may be information processing apparatuses such as wireless chips supporting UHR PPDU transmission and reception. Specific examples of the STAs 121 and 122 include cameras, tablet computers, smart phones, PCs, portable telephones, video cameras, projectors, and wearable devices such as smart glasses but are not limited thereto.

Communication apparatuses such as the APs 100 to 102 and the STAs 121 and 122 can perform communication by using the 2.4 GHz, 3.6 GHz, 5 GHz, and 6 GHz frequency bands, and the 45 GHz and 60 GHz millimeter-wave frequency bands. The frequency band used by each communication apparatus is not limited thereto, and each communication apparatus may use different frequency bands such as the sub-1 GHz frequency band. The AP 101 and the STA 102 can perform communication by using the 20 GHz, 40 MHz, 80 MHz, 160 MHz, 320 MHz, 540 MHz, 640 MHz, 1,080 MHz, and 2,160 MHz bandwidths. The bandwidth used by each communication apparatus is not limited thereto, and each communication apparatus may use different bandwidths such as the 240 MHz and 4 MHz bandwidths.

The APs 100 to 102 are able to perform Multi-AP communication conforming to IEEE802.11 UHR. More specifically, the APs 100 to 102 support a configuration where a plurality of APs cooperatively communicates with the STA connected to each AP, such as the configuration prescribed by IEEE802.11 UHR. In this case, to avoid interference between networks provided by the APs, the AP 100 partly allocates a Transmission Opportunity (TXOP) secured by the AP 100 to the APs 101 and 102 in a shared manner, and the plurality of APs performs cooperative communication on a time-division basis. Each AP implements communication with the STA connected based on the TXOP allocated to its own AP. An AP that secures a TXOP and partly allocates the TXOP to other APs in a shared manner is referred to as a Sharing AP. An AP subjected to the TXOP allocation by the Sharing AP is referred to as a Shared AP. The Sharing AP controls cooperative operations by issuing instructions to other APs, and therefore may also be referred to as a Coordinator AP. Likewise, the Shared AP may also be referred to as a Coordinated AP. Although, according to the present embodiment, no STA directly connects to the Sharing AP, the Sharing AP may perform direct frame transmission to and reception from STAs. In this case, for example, the AP 100 may instruct the AP 101 or 102 to perform frame transmission and reception between the AP 101 or 102 and the STAs, while transmitting and receiving frames between its own apparatus and the STAs. The Sharing AP 100 may transmit frames to be transmitted to the STAs 121 and 122, to the Shared APs 101 and 102. Alternatively, the Sharing AP 100 may receive frames from the STAs 121 and 122 via the Shared APs 101 and 102.

All of the APs in the same network can operate as a Sharing AP, and any one AP can be determined to operate as a Sharing AP based on a certain criterion. For example, each AP may perform contention-based access to a wireless medium, and the AP that acquires a TXOP first may operate as a Sharing AP. This enables dynamic role conversion and makes it easier for each AP to secure the data transmission opportunity, thus enabling more efficient use of wireless resources. The Sharing AP may perform only Multi-AP communication control such as transmitting an instruction to each Shared AP without transmitting a Beacon frame. Thus, each Shared AP does not need to mount the function of the Sharing AP, contributing to a reduction in the cost of communication apparatuses. If each AP has a plurality of wireless LAN control units, the AP may operate as a plurality of Shared APs.

The present embodiment provides a mechanism for preventing frame transmission of STAs existing in the communication range of the Shared AP during the TXOP period of the Shared AP having been subjected to the TXOP allocation by the Sharing AP. The mechanism will be specifically described below.

### <Apparatus Configuration>

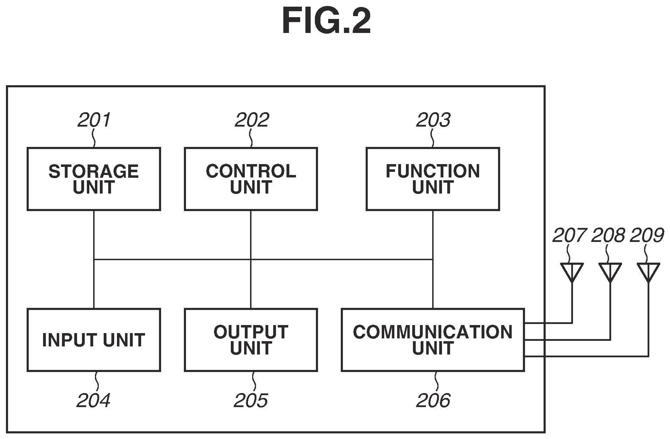

Fig. 2 illustrates an example of a hardware configuration of an AP. As an example of the hardware configuration, the AP includes a storage unit 201, a control unit 202, a function unit 203, an input unit 204, an output unit 205, a communication unit 206, and antennas 207 to 209. Although the present embodiment assumes that the AP has a plurality of antennas, the AP may have only one antenna.

The storage unit 201 includes both a ROM and a RAM or either one of the ROM and RAM and stores programs for executing various operations to be described below, communication parameters for wireless communication, and other various information. RAM is an abbreviation for Random Access Memory, and ROM is an abbreviation for Read Only Memory. In addition to memories such as the ROM and RAM, the storage unit 201 may include storage media such as a hard disk drive, a Solid State Drive (SSD), and other nonvolatile storage devices.

The control unit 202 includes, for example, processors such as a Central Processing Unit (CPU), Micro Processing Unit (MPU), Graphics Processing Unit (GPU), and Neural Network Processing Unit (NPU) and further includes an Application Specific Integrated Circuit (ASIC), a Digital Signal Processor (DSP), and a Field Programmable Gate Array (FPGA). The control unit 202 executes a program stored in the storage unit 201 and controls the entire apparatus by operating hardware circuitry such as the ASIC.

The control unit 202 may control the entire apparatus in collaboration with a program stored in the storage unit 201 and an Operating System (OS).

The control unit 202 also controls the function unit 203 to perform predetermined processing such as imaging, printing, and projection. The function unit 203 is a hardware component that allows the apparatus to perform predetermined processing. For example, if the AP is a camera such as a digital still camera or a smart phone with a camera, the function unit 203 is an imaging unit that captures surrounding images via a camera unit (not illustrated) of the AP. For example, if the AP is a printer, the function unit 203 is a printing unit for performing printing on a sheet such as paper based on print data obtained from the outside via wireless communication. For example, if the AP is a projector or a smart glass, the function unit 203 is a projection unit for projecting image data and video data obtained from the outside via wireless communication. If the AP is a smart glass, the projection surface is the retina of an end user or the like. Data processed by the function unit 203 may be data stored in the storage unit 201 or data communicated with other APs and STAs via the communication unit 206 to be described below.

The input unit 204 accepts various operations from a user. The output unit 205 outputs various types of information to the user. Examples of outputs from the output unit 205 include at least one of display on a screen, a voice from a speaker, and a vibration. Both the input unit 204 and the output unit 205 may be implemented as a single module like a touch panel.

The communication unit 206 controls wireless communication conforming to the IEEE802.11 standard series. According to the present embodiment, the communication unit 206 can perform transmission and reception of UHR PPDUs, which are frames defined in a UHR standard and transmission and reception of PPDUs compliant with standards prior to the UHR standard, in collaboration with the antenna 207. For example, the antennas 207 to 209 are capable of transmitting and receiving frames of at least one of the sub GHz, 2.4 GHz, 5 GHz, 6 GHz, 7 GHz, and 60 GHz frequency bands.

If the AP supports the above-described NFC standard, Bluetooth^{®} standard, wired LAN network, or the like, the communication unit 206 can be configured to control wireless and wired communications conforming to these communication standards.

### <Functional Configuration>

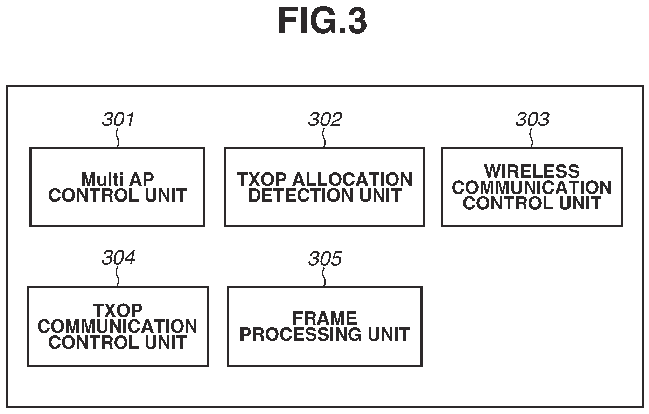

The software configuration of the APs (APs 100 to 102) will be described below with reference to Fig. 3. The APs include a Multi-AP control unit 301, a TXOP allocation detection unit 302, a wireless communication control unit 303, a TXOP communication control unit 304, and a frame processing unit 305.

Each function will be described below. The Multi-AP control unit 301 controls frame transmission and reception between the APs to perform grouping of the cooperatively operating APs, determination of the roles of the Sharing and Shared APs, TXOP allocation to the Shared AP by the Sharing AP, and the like.

The TXOP allocation detection unit 302 detects a TXOP allocated to the Shared AP by the Sharing AP. More specifically, the frame processing unit 305 analyzes a notification frame for allocating a TXOP received by the wireless communication control unit 303 and the TXOP allocation detection unit 302 maintains identification information for the AP having been subjected to the TXOP allocation, and a period of the TXOP allocated to the AP.

The wireless communication control unit 303 controls processing to transmit a frame generated by the frame processing unit 305 to the outside, in collaboration with the communication unit 206 and the antennas 207 to 209. The wireless communication control unit 303 also controls processing to receive frames transmitted by other APs and STAs in collaboration with the communication unit 206 and the antennas 207 to 209. The received frame is transferred to the frame processing unit 305 which analyzes the contents of the frame.

The TXOP communication control unit 304 controls communication with the STAs connected to the network of its own AP based on the identification information and the TXOP period of the AP detected by the TXOP allocation detection unit 302. More specifically, if the identification information for the AP indicates its own AP, the TXOP communication control unit 304 instructs the frame processing unit 305 to generate a MU-RTS Trigger frame having a period setting based on the TXOP period and transmits the frame via the wireless communication control unit 303. Subsequently, the TXOP communication control unit 304 instructs the frame processing unit 305 to generate a data frame to be transmitted to the STA during the TXOP period and transmits the frame via the wireless communication control unit 303. Alternatively, in a case where data is received from the STA, the TXOP communication control unit 304 instructs the frame processing unit 305 to generate a Basic Trigger frame having a period setting based on the TXOP period and transmits the frame via the wireless communication control unit 303, thus promoting the transmission of uplink data of the STA. The period specified by the MU-RTS Trigger frame or the Basic Trigger frame is assumed to be shorter than the detected TXOP period.

The frame processing unit 305 generates frames specified by the Multi-AP control unit 301 or the TXOP communication control unit 304 and transfers results of analyzing frames received by the wireless communication control unit 303 to the Multi-AP control unit 301 and the TXOP communication control unit 304.

### <Processing Flow>

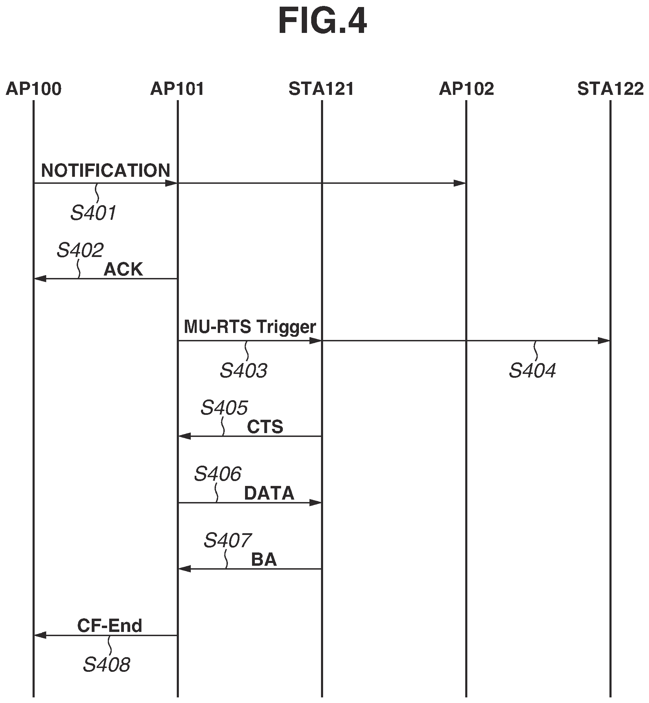

A specific processing flow will be described below with reference to Figs. 4 to 7. The overall communication sequence will be described below with reference to Fig. 4.

Fig. 4 is a sequence diagram illustrating processing for allocating a TXOP from the AP 100 as a Sharing AP to the AP 101 as a Shared AP in a shared manner and preventing frame transmission of the STA 122 existing in the communication range of the AP 101 during the TXOP period. The diagram in Fig. 4 assumes that the APs 101 and 102 have completed prior procedures for cooperative operations as Multi-APs.

In step S401, the AP 100 transmits a notification frame for allocating the secured TXOP period to the AP 101 in a shared manner. The notification frame includes information for identifying the AP to be subjected to the TXOP allocation, bandwidth information, and information about the TXOP period.

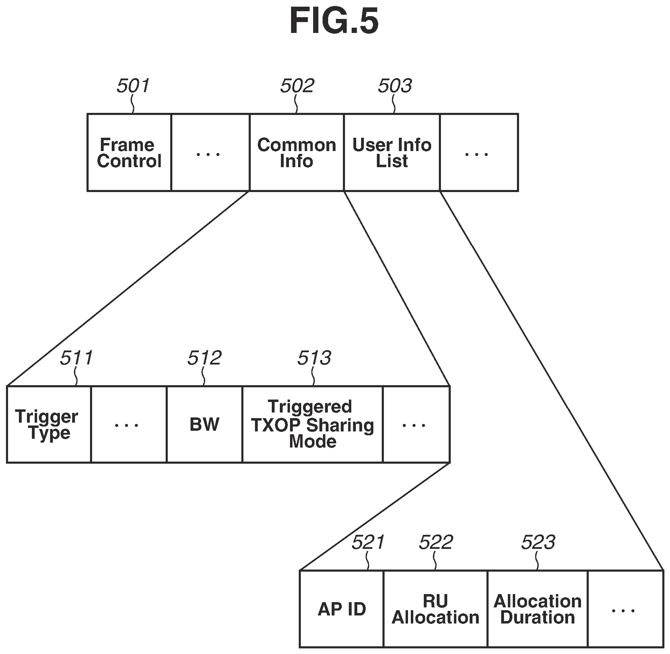

Fig. 5 illustrates an example of the notification frame to be transmitted. The notification frame, a type of Trigger frames, includes a Frame Control field 501, a Common info field 502, and a User Info List field 503 as illustrated in Fig. 5. The Frame Control field 501 includes information about the frame type. For example, the 2nd to 7th bits sequentially set to 100100 indicate that its own frame is a Trigger frame.

The Common info field 502 includes a Trigger Type field 511, a BW field 512, and a Triggered TXOP Sharing Mode field 513. The Trigger Type field 511 indicates the type of the Trigger frame. Since this sequence transmits a notification frame, the Trigger Type field 511 is set to the value 9 or larger. The BW field 512 indicates the bandwidth of PPDU subjected to notification frame transmission. The values 0 to 4 correspond to 20 MHz, 40 MHz, 80 MHz, 160 MHz, and 320 MHz, respectively. The Triggered TXOP Sharing Mode field 513 indicates the TXOP sharing mode. If the value of this field is 1, the field indicates that the communication apparatus having been subjected to the TXOP allocation shares the TXOP to transmit the frame to the AP. If the value of this field is 2, the field indicates that the communication apparatus having been subjected to the TXOP allocation shares the TXOP to transmit the frame to the AP or STA. This sequence sets the field to the value 2. The field may be set to another value. For example, the value 3 may explicitly indicate that the transmission destination AP can transmit data to other APs.

Information about the allocation of each AP can be indicated by using the User Info field of the User Info List field 503. The User Info field includes an AP ID subfield 521, an RU Allocation subfield 522, and an Allocation Duration subfield 523. An AP ID subfield 921 indicates the value of the identifier for identifying the AP to be subjected to the TXOP allocation. The AP ID is assumed to be information for identifying each AP predetermined by the Sharing and Shared APs. This value may be a BSSID, or a MAC Address or a BSS color of the AP. The RU Allocation subfield 522 indicates a resource unit of the frequency to be allocated. For example, if the 0th bit of the RU Allocation subfield 522 is set to 0, any one of Primary 20 MHz, 40 MHz, and 80 MHz is allocated. If 160 MHz or 320 MHz is allocated, the 0th bit is set to 1. The Allocation Duration subfield 523 indicates the period of the TXOP to be allocated. The value of the TXOP period may be specified in units such as microseconds or milliseconds. For example, the value may be able to be specified as a value multiplied by a predetermined time unit such as 16 microseconds.

This sequence is processing in a case where the secured TXOP of the AP 100 is partly allocated to the AP 101 in a shared manner. When the AP 101 receives a notification frame from the AP 100, in step S402, the AP 101 recognizes that a TXOP has been allocated to its own AP based on the identification information for the AP, acquires the period of the allocated TXOP, and transmits an ACK frame. The AP 101 may transmit a CTS frame instead of an ACK frame. Then, the AP 101 confirms whether to transmit data to or receive data from the STA connected to its own AP during the TXOP period. In this sequence, data is transmitted from the AP 101 to the STA 121. Therefore, the AP 101 specifies an AID of the STA 121 and transmits a MU-RTS Trigger frame having a setting of the period of communication with the STA 121 to notify communication apparatuses existing in the communication range that a TXOP is to be secured. In this case, the communication period specified by the MU-RTS Trigger frame is set to be shorter than the period of the TXOP allocated by the notification frame. When the STA 122 receives this notification, in step S404, the STA 122 sets a Network Allocation Vector (NAV) as a transmission-inhibited period to prevent transmission during the TXOP period. Instead of transmitting the MU-RTS Trigger frame, the AP 101 may transmit a data frame to a connected STA. This enables preventing transmission by surrounding communication apparatuses while reducing the overhead associated with the exchange of the MU-RTS Trigger and the CTS frames. When transmitting a data frame, the AP 101 adjusts the amount of data so that the communication period becomes shorter than the period of the TXOP allocated by the notification frame. Alternatively, the AP 101 may adjust the data amount to be transmitted so that the completion time of data frame transmission is reduced by the time period required for the transmission destination STA to return a Block Ack (BA) frame. This enables completing communication with the STA within the period of the TXOP allocated by the notification frame.
Alternatively, the AP 101 may perform a step for promoting the STA 121 to perform data transmission. For example, by transmitting a Basic Trigger frame and re-allocating wireless resources to the STA 121 from among wireless resources allocated to the AP 101, the STA 121 is able to transmit a data frame to the AP 101. In this case, by transmitting a Basic Trigger frame, the communication apparatuses not having received the frame transmitted from the AP 100 can be notified that the TXOP is secured. This enables preventing frame transmission by surrounding communication apparatuses during the period of the TXOP allocated to the AP 101. Also in this case, the communication period specified by the Basic Trigger frame is set to be shorter than the period of the TXOP allocated by the notification frame. Alternatively, the AP 101 may promote communication between the STA 121 and other STAs by using the MU-RTS Trigger frame. More specifically, the AP 101 further allocates the period of the TXOP allocated by the AP 100 in a shared manner, to the STA 121 in a shared manner. In this case, the Triggered TXOP Sharing Mode field included in the Common info field of the MU-RTS Trigger frame is set to the value 1 or 2. For example, the value 1 indicates that a TXOP is to be allocated for communication with the AP 101, and the value 2 indicates that a TXOP is to be allocated for communication with other STAs or the AP 101. Further, when sharing a TXOP, the period of the TXOP to be allocated can be indicated by using the Allocation Duration subfield of the User Info field of the User Info List field. The allocation period is calculated by multiplying a value set in the Allocation Duration subfield by 16 microseconds. The above-described period can be set to be shorter than the period of the TXOP allocated by the notification frame. This enables communicating with the STA connected to its own AP during the period of the allocated TXOP.

If the AP 101 propagates the period of the TXOP allocated by the AP 101 to surrounding communication apparatuses in this way, the AP 101 is able to notify the STA 122 unable to receive a frame from the AP 100 that the AP 101 has secured a TXOP. This enables the STA 122 to set the NAV and prevent frame transmission. If an STA having received the notification frame from the AP 100 sets the NAV, the STA can also reset the NAV upon reception, from the AP 101, of a MU-RTS Trigger frame for TXOP sharing.

The STA 121 may transmit other types of frames in step S404. For example, the STA 121 may partly update information in the notification frame received in step S401 and then transfer the frame. When transferring the frame, the source address of the MAC header starting with the Frame Control field 501 in Fig. 5 is updated to the MAC address of the Shared AP 101. For the Common info field 502 and the User Info List 503, data identical to the data received from the Sharing AP 100 will be transmitted.

In step S405, the STA 121 having received the MU-RTS Trigger frame transmits a CTS frame without setting the NAV, to confirm that its own AID is set. In step S406, the AP 101 having received the CTS frame transmits a data frame. In step S407, the STA 121 having received the data frame transmits a BA frame as acknowledgment. When scheduled data frame transmission and reception are completed, in step S408, the AP 101 transmits a CF-End frame to the AP 100 to notify the AP 100 that the allocated TXOP is to be released. The CF-End frame may be transmitted only when communication is completed before the period of the allocated TXOP. Upon expiration of the period of the allocated TXOP or upon reception of the CF-End frame, the AP 100 subsequently confirms the AP to be subjected to the TXOP allocation. If the secured TXOP remains, the AP 100 performs similar processing to steps S401 to S408 on other APs.

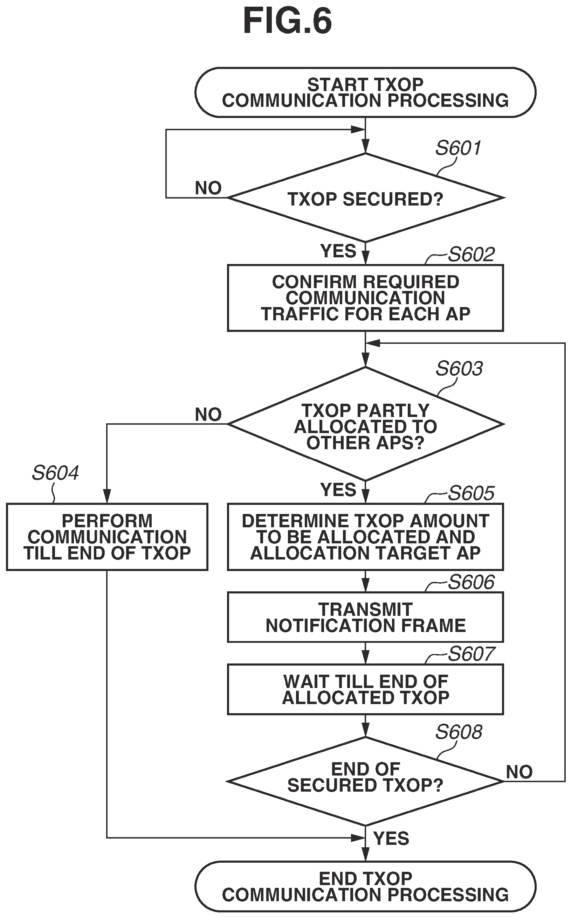

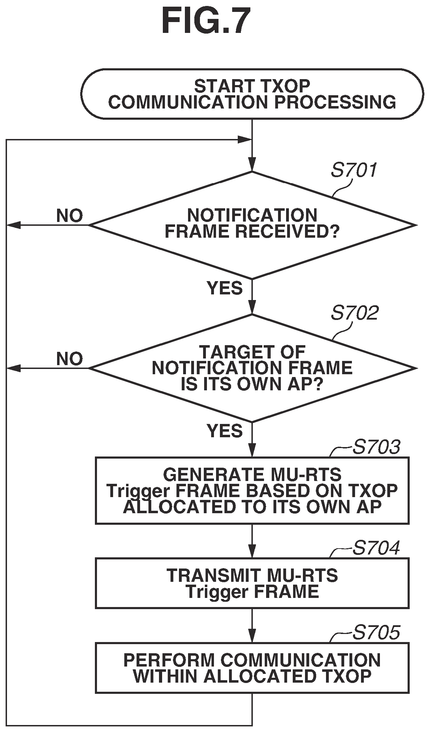

Subsequently, control of the Sharing and Shared APs according to the present embodiment will be described below with reference to Figs. 6 and 7, respectively. Fig. 6 is a flowchart illustrating processing performed by the AP 100 as a Sharing AP to secure a TXOP and then partly allocate the TXOP to other APs in a shared manner. Fig. 7 is a flowchart illustrating extracted processing performed by the AP 101 as a Shared AP when the TXOP is allocated by the Sharing AP 100.

Each piece of processing illustrated in the flowchart in Fig. 6 is implemented when the processor of the control unit 202 of the AP 100 executes a computer program stored in the storage unit 201. Each piece of processing illustrated in the flowchart in Fig. 7 is implemented when the processor of the control unit 202 of the AP 101 or 102 executes a computer program stored in the storage unit 201. Some pieces of processing such as transmission, modulation, reception, and decoding in Figs. 6 and 7 are implemented by cooperative operation of a processor of the control unit 202 of each communication apparatus, the communication unit 206, and an ASIC, a DSP, an FPGA, and the like of the control unit 202. When the entity of the processing is to be clarified, the processing will be described below so that the subject is the function unit described above with reference to Fig. 3.

The flowchart in Fig. 6 performed by the Sharing AP will be described below. In step S601, the control unit 202 of the AP 100 makes an attempt to secure a TXOP by checking whether the channel is in the idle state during the wait time for avoiding collision determined with randomness. If the control unit 202 confirms that the channel is in the idle state during the wait time for the collision time, the control unit 202 determines that its own AP has secured a TXOP. If the control unit 202 determines that its own AP has secured a TXOP, the processing proceeds to step S602. On the other hand, if the operating channel is in the busy state or becomes busy because another communication apparatus secures a TXOP and starts data transmission during the wait time of its own AP, the control unit 202 determines that its own AP has not yet secured a TXOP. If the control unit 202 determines that its own AP has not yet secured a TXOP, the control unit 202 waits until the channel re-enters the idle state and then makes an attempt to secure a TXOP again.

In step S602, the control unit 202 confirms the required communication traffic based on the amount and priority of the data to be transmitted or received by the APs 100 to 102, and determines the required data transmission time.

In step S603, the control unit 202 determines whether to partly allocate the TXOP to other APs based on the determination in step S602. If the AP 100 itself communicates with an STA, the processing proceeds to step S604. If the AP 100 will allocate the secured TXOP to other APs, the processing proceeds to step S606.

In step S604, the TXOP communication control unit 304 communicates with the STA connected to the AP 100 until the TXOP period expires, in collaboration with the communication unit 206 and the antennas 207 to 209.

In step S605, the control unit 202 determines the allocation target Shared AP and the amount of the TXOP to be allocated, based on the data transmission time confirmed in step S602 out of the secured TXOP. In step S606, the control unit 202 transmits a notification frame to allow the Shared AP to perform communication during the determined TXOP period, in collaboration with the communication unit 206 and the antennas 207 to 209. In step S607, the TXOP allocation detection unit 302 instructs the AP 100 to wait until the period of the allocated TXOP expires. Upon reception of the CF-End frame from the Shared AP having been subjected to the TXOP allocation or upon expiration of the period of the allocated TXOP, the processing proceeds to step S608.

In step S608, the control unit 202 confirms whether the entire secured TXOP ends. If the entire TXOP period has not expired, the processing proceeds to step S603. This processing ends upon expiration of the TXOP period. The processing of this flowchart allocates the TXOP to other APs before performing communication between its own AP and the STA. However, the processing may perform communication between its own AP and the STA before allocating the TXOP to other APs or perform communication between its own AP and the STA during the TXOP to be allocated to a plurality of other APs.

The flowchart in Fig. 7 performed by a Shared AP will be described below. In step S701, the Multi-AP control unit 301 of the Shared AP collaborates with the wireless communication control unit 303 and the frame processing unit 305 to confirm whether the Shared AP has received a notification frame from the Sharing AP. The Shared AP continues waiting until a notification frame is received. Upon reception of a notification frame, the processing proceeds to step S702.

In step S702, the frame processing unit 305 confirms whether the Shared AP having been subjected to the TXOP allocation by the notification frame is its own AP. This is determined, for example, based on the AP ID included in the notification frame. The AP ID is an identifier for identifying each AP, which is issued when the AP cooperatively operating as a Multi-AP is determined. If the AP ID included in the notification frame coincides with the AP ID of its own AP, the frame processing unit 305 determines that the TXOP is allocated to its own AP. If the AP ID differs from that of its own AP, the frame processing unit 305 determines that the period is allocated to a Shared AP other than its own AP. If the AP ID coincides with that of its own AP and the TXOP is allocated, the processing proceeds to step S703. If AP ID differs from that of its own AP and the TXOP is not allocated, the processing proceeds to step S701.

In step S703, the TXOP allocation detection unit 302 confirms the period of the TXOP allocated to its own AP by the notification frame. The Shared AP determines the period of communication between its own AP and the STA connected to its own AP based on the period of the allocated TXOP, and generates a MU-RTS Trigger frame.

In step S704, the TXOP communication control unit 304 transmits a MU-RTS Trigger frame to communicate with the STA connecting to the Shared AP during the period of the determined TXOP, in collaboration with the communication unit 206 and the antennas 207 to 209. The period indicated by the MU-RTS Trigger frame is assumed to be shorter than the period of the TXOP detected by the TXOP detection unit 302. This also applies to a case where the Shared AP transmits a Basic Trigger frame for promoting data transmission of the STA. If the MU-RTS Trigger frame has been transmitted, the processing proceeds to step S705.

In step S705, the Shared communication control unit 304 controls communication during the determined TXOP period in collaboration with the communication unit 206 and the antennas 207 to 209. More specifically, the Shared communication control unit 304 controls communication so that CTS frame reception, data frame transmission and reception, and ACK frame/BA frame transmission and reception are completed within the TXOP period. Alternatively, if scheduled communication is completed earlier than the period of the allocated TXOP, the Shared AP transmits a CF-End frame to the Sharing AP in collaboration with the communication unit 206 and the antennas 207 to 209. When the allocated TXOP period expires or CF-End frame is transmitted, the processing proceeds to step S701.

### <Second Embodiment>

The present embodiment provides a mechanism for preventing frame transmission of STAs existing out of the communication range of a Shared AP during the TXOP period of the Shared AP having been subjected to the TXOP allocation by the Sharing AP.

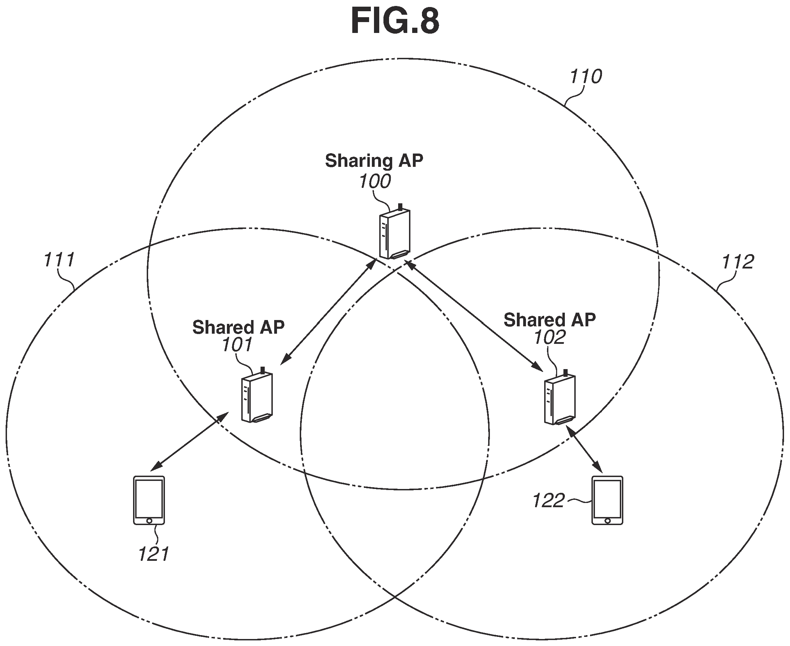

Fig. 8 illustrates an example configuration of a network system according to the second embodiment. The configuration of a communication apparatus is similar to that illustrated in Fig. 1 except for the position of the STA 122. Referring to Fig. 1, the STA 122 exists in the communication range of the Shared AP 101. Referring to Fig. 8, the STA 122 exists not in the communication range of the Shared AP 101 but in the communication range of the Shared AP 102.

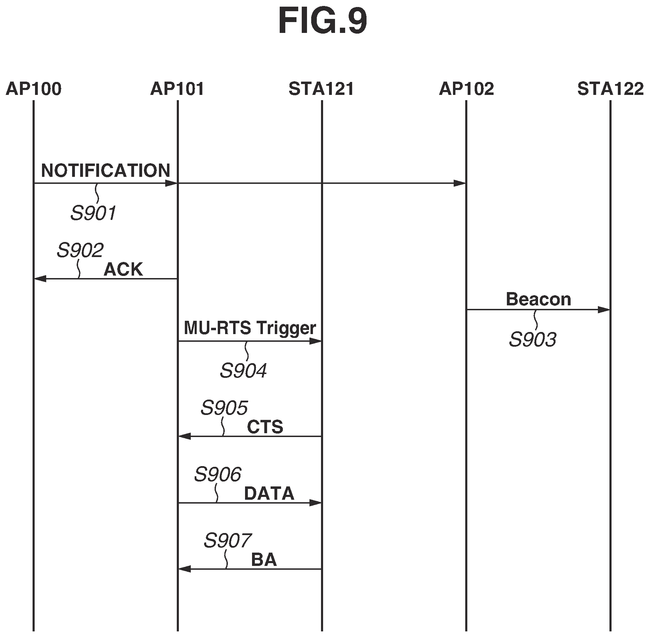

Fig. 9 is a sequence diagram illustrating a flow of processing for allocating a TXOP to the AP 101 as a Shared AP in a shared manner from the AP 100 as a Sharing AP and preventing frame transmission of the STA 122 existing out of the communication range of the AP 101 during the TXOP period.

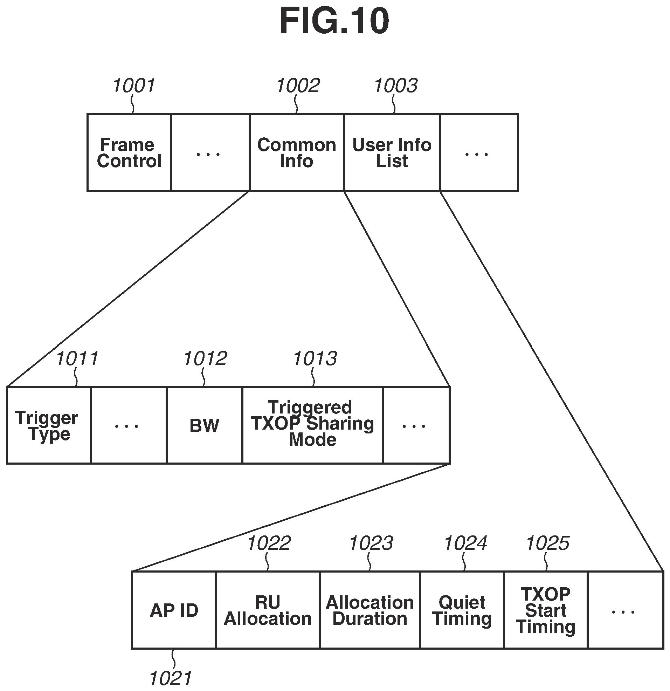

In step S901, the AP 100 transmits a notification frame for allocating the secured TXOP period to the AP 101 in a shared manner. The notification frame includes, for example, information illustrated in Fig. 10. Fields 1001 to 1003, 1011 to 1013, and 1021 to 1024 in Fig. 10 are similar to the fields 501 to 503, 511 to 513, and 521 to 523 in Fig. 5, respectively, and descriptions thereof will be omitted. A Quiet Timing 1024 is information for specifying the timing for transmitting a management frame if an AP other than the AP specified by AP ID 1021 receives this notification frame. The management frame is used to prevent the STA connected to its own AP from performing transmission. For example, time offset information in microseconds using the time of the notification frame reception as the starting time may be specified. A TXOP Start Timing 1025 is information for specifying the timing to start communication by using the TXOP allocated to the AP specified by AP ID 1021. For example, time offset information in microseconds using the time of the notification frame reception as the starting time may be specified. The timing specified by the TXOP Start Timing 1025 is later than the timing specified by the Quiet Timing.

This sequence is processing in a case where the TXOP secured by the AP 100 is partly allocated to the AP 101 in a shared manner. When the AP 102 receives the notification frame from the AP 100, in step S903, the AP 102 recognizes that the TXOP is not allocated to its own AP based on the identification information for the AP and transmits a management frame for preventing transmission of the STA connecting to the AP 102. More specifically, the AP 102 generates a management frame supplied with any one of a Quiet element, a Quiet channel element, and a Quiet time period element having a setting of a period during which no transmission occurs with the BSS formed by its own AP based on the TXOP period included in the notification frame, and transmits the frame at the timing specified by the notification frame. Although this sequence uses a Beacon frame as a management frame, other management frames such as a Probe Response frame can also be used. When the STA 122 receives the Beacon frame, the STA 122 analyzes the element included in the Beacon frame to prevent frame transmission during the specified period.

On the other hand, when the AP 101 receives the notification frame from the AP 100, in step S902, the AP 101 recognizes that the TXOP has been allocated to its own AP based on the identification information for the AP, acquires the period of the allocated TXOP, and transmits an ACK frame. The AP 101 may transmit a CTS frame instead of the ACK frame. Then, the AP 101 confirms whether to transmit data to or receive data from the STA connecting to its own AP during the TXOP period. In this sequence, the AP 101 transmits data to the STA 121. Therefore, the AP 101 transmits a MU-RTS Trigger frame specifying the AID of the STA 121 to notify communication apparatuses existing in the communication range that the TXOP is secured. However, since the AP 101 needs to transmit the MU-RTS Trigger frame after the AP 102 transmits a Beacon frame to prevent transmission of the STA connecting to the AP 102, the AP 101 transmits the frame at the timing specified by the notification frame. Processing in subsequent steps S905 to S907 is similar to the processing in steps S405 to S407 in Fig. 5, respectively, descriptions thereof will be omitted.

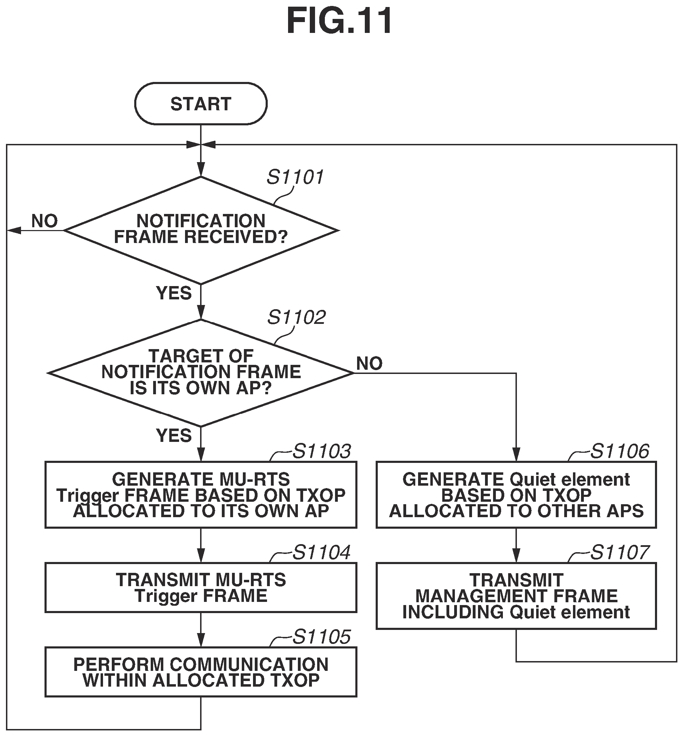

The flowchart in Fig. 11 performed by the Shared AP will be described below. Processing of steps S1101 and S1105 is similar to the processing steps of S701 to S705 in Fig. 7, respectively, and descriptions thereof will be omitted. In step S1102, the frame processing unit 305 confirms whether the Shared AP having been subjected to the TXOP allocation by the notification frame is its own AP. If the frame processing unit 305 determines that the target of the frame is not its own AP, the processing proceeds to step S1106. In step S1106, the TXOP allocation detection unit detects the period of the TXOP allocated by the notification frame and generates a Quiet element having a setting of a period during which no transmission occurs with the BSS formed by its own AP based on the TXOP communication control unit. In this case, the period of the Quiet Element is set to the period of the TXOP allocated by the notification frame or longer. In step S1107, the Shared AP adds the Quiet element to a management frame and transmits the management frame at the timing specified by the notification frame. Then, the processing proceeds to step S1101. Although, in this flowchart, the element to be added to a management frame is the Quiet element, the element may be the Quiet channel element or the Quiet time period element.

The above-described processing enables preventing frame transmission of STAs existing out of the communication range of the Shared AP during the TXOP period of the Shared AP having been subjected to the TXOP allocation by the Sharing AP.

### <Other Embodiments>

The present disclosure can also be achieved when a program for implementing at least one of the functions according to the above-described embodiments is supplied to a system or apparatus via a network or storage medium, and at least one processor in a computer of the system or apparatus reads and executes the program. Further, the present disclosure can also be achieved by circuitry such as an Application Specific Integrated Circuit (ASIC) for implementing at least one function.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-177889, filed October 13, 2023, which is hereby incorporated by reference herein.

### Descriptions of Reference Numerals

100 AP
101 AP
102 AP
121 STA
122 STA
202 Control unit
206 Communication unit

## Claims

1. An access point apparatus for performing wireless communication conforming to IEEE802.11 standard on a time-division basis in cooperation with one or more other access point apparatuses, the apparatus comprising:
a reception unit configured to receive a notification frame for allocating a Transmission Opportunity (TXOP) from other access points; and
a transmission unit configured to, in a case where the TXOP is allocated to its own access point apparatus, transmit a Trigger frame having a setting of a period of communication between the access point apparatus and a station apparatus connected to the access point based on a period of the TXOP.

2. The access point apparatus according to Claim 1, wherein the notification frame includes information for identifying an access point to be subjected to the TXOP allocation.

3. The access point apparatus according to Claim 1, wherein the period to be set in the Trigger frame is shorter than the period of the TXOP.

4. The access point apparatus according to Claim 1, wherein the Trigger frame is a MU RTS Trigger frame.

5. The access point apparatus according to Claim 1, wherein the Trigger frame is a Basic Trigger frame.

6. An access point apparatus for performing wireless communication conforming to the IEEE802.11 standard on a time-division basis in cooperation with one or more other access point apparatuses, the apparatus comprising:
a reception unit configured to receive a notification frame for allocating a Transmission Opportunity (TXOP) from other access points; and
a transmission unit configured to, in a case where the TXOP is not allocated to its own access point apparatus, transmit a management frame having a setting of a period during which no transmission occurs with a BSS formed by the access point apparatus based on a period of the TXOP.

7. The access point apparatus according to Claim 6, wherein the notification frame includes information for identifying an access point to be subjected to the TXOP allocation.

8. The access point apparatus according to Claim 6, wherein the notification frame includes information about a timing when the TXOP starts.

9. The access point apparatus according to Claim 6, wherein the notification frame includes information about a timing when the management frame is transmitted.

10. The access point apparatus according to Claim 6, wherein the management frame is a Beacon frame.

11. The access point apparatus according to Claim 6, wherein the management frame is a Probe Response frame.

12. The access point apparatus according to Claim 6, wherein information about the period during which no transmission occurs is included in any one of a Quiet element, a Quiet channel element, and a Quiet time period element of the management frame.

13. A method for controlling an access point apparatus for performing wireless communication conforming to the IEEE802.11 standard on a time-division basis in cooperation with one or more other access point apparatuses, the method comprising:
receiving a notification frame for allocating a Transmission Opportunity (TXOP) from other access points; and
transmitting, in a case where the TXOP is allocated to its own access point apparatus, a Trigger frame having a setting of a period of communication between the access point apparatus and a station apparatus connected to the access point based on a period of the TXOP.

14. A method for controlling an access point apparatus for performing wireless communication conforming to the IEEE802.11 standard on a time-division basis in cooperation with one or more other access point apparatuses, the method comprising:
receiving a notification frame for allocating a Transmission Opportunity (TXOP) from other access points; and
transmitting, in a case where the TXOP is not allocated to its own access point apparatus, a management frame having a setting of a period during which no transmission occurs with a BSS formed by the access point apparatus based on a period of the TXOP.

15. A program for causing a computer to execute the method for controlling an access point apparatus according to any one of Claims 13 and 14.
